# EUROPÄISCHE PATENTSCHRIFT

(11) **EP 2 728 345 B1**
(45) Veröffentlichungstag und Bekanntmachung des Hinweises auf die Patenterteilung: **20.07.2016**
(21) Anmeldenummer: 12190839.6
(22) Anmeldetag: 31.10.2012
(51) Int. Cl.: G01N 29/04, G01N 29/30

(54) **Verfahren zum Ermitteln einer Randschichtcharakteristik eines Bauteils**
Method for determining a surface layer characteristic of a component
Procédé de détermination d'une caractéristique de couche marginale d'un composant

(43) Veröffentlichungstag der Anmeldung: 07.05.2014
(73) Patentinhaber: MTU Aero Engines AG, 80995 München (DE)
(72) Erfinder: Bamberg, Joachim, 85221 Dachau (DE); Hessert, Roland, 82211 Herrsching (DE)

(56) Entgegenhaltungen:
- EP-A1- 1 998 175
- WO-A1-2006/043299
- JP-A- 9 236 585
- US-A- 5 894 092

## Beschreibung

Verfahren und Vorrichtung zum Ermitteln einer Randschichtcharakteristik eines Bauteils Beschreibung

Die Erfindung betrifft ein Verfahren zum Ermitteln einer Randschichtcharakteristik eines Bauteils.

Zur Erhöhung der Lebensdauer von hochbelasteten Bauteilen werden deren Oberflächen oberflächenbehandelt. Verfahren und Vorrichtungen zum Oberflächenbehandeln von Bauteilen sind aus dem Stand der Technik in verschiedenen Ausgestaltungen bekannt. Oberflächenbehandlungsverfahren können grundsätzlich spanend, läppend, abtragend, beschichtend oder reinigend durchgeführt werden. Beispielsweise offenbart die DE 10 2007 009 470 A1 ein Verfahren und eine Vorrichtung zum Oberflächenstrahlen eines Bauteils für eine Gasturbine eines Flugzeugtriebwerks. Dabei wird zumindest ein Bereich der Oberfläche des Bauteils mit Strahlgut wie beispielsweise Stahlkugeln beaufschlagt, um eine Oberflächenverfestigung und damit eine Erhöhung der Lebensdauer zu erzielen.

Die Qualität der Oberflächenbehandlung, das heißt die in die Randschicht eingebrachten Eigenspannungs- und Verfestigungszustände der behandelten Bauteiloberfläche, kann anschließend beispielsweise durch Röntgenbeugung mit elektrochemischem Abtrag oder durch die sogenannte Bohrlochmethode ermittelt werden, um eine Lebensdauerprognose des Bauteils zu erstellen. Hierbei handelt es sich jedoch um zerstörende Prüfverfahren. Weiterhin kann eine indirekte Kontrolle mit Hilfe von mitverfestigten Referenzproben (Almenplättchen) an einzelnen, gut zugänglichen Bauteilbereichen vorgenommen werden. Dies ermöglicht aber nur sehr begrenzte Aussagen über die Qualität des gesamten verfestigten Bauteilbereichs. Alternativ ist es bekannt, die Qualität der Oberflächenbehandlung durch Synchrotronstrahlung oder durch Neutronenbeugung zu beurteilen. Derartige Messverfahren erfordern jedoch einen enormen apparativen Aufwand sowie die Verwendung radioaktiver Strahlquellen und ermöglichen zudem nur die Vermessung einfachster Bauteilgeometrien mit geringer Ortsauflösung. US5894092 offenbart ein Verfahren zur Ermittlung von Randschichtcharakteristika mittels in die Randschicht eingebrachten Rayleighwellen wobei die Transmission zwischen einem Sender und einem Empfänger mit einer an einer Referenzprobe durchgeführten Messung verglichen wird. Aufgabe der vorliegenden Erfindung ist es, eine einfachere, flexiblere und zerstörungsfreie Ermittlung der Randschichtcharakteristik eines Bauteils zu ermöglichen.

Die Aufgabe wird erfindungsgemäß durch ein Verfahren mit den Merkmalen des Anspruchs 1 gelöst. Vorteilhafte Ausgestaltungen mit zweckmäßigen Weiterbildungen der Erfindung sind in den Unteransprüchen angegeben.

Bei einem erfindungsgemäßen Verfahren zum Ermitteln einer Randschichtcharakteristik eines Bauteils, insbesondere eines Bauteils für ein Flugzeugtriebwerk, wird ein Referenzkörper mit einer bekannten Randschichtcharakteristik an der Oberfläche des Bauteils angeordnet wird. Mittels eines Ultraschallsenders wird wenigstens eine Ultraschallwelle in die Oberflächen des Bauteils und des Referenzkörpers eingeleitet. Mittels eines Ultraschalldetektors wird anschließend wenigstens eine aus der Wechselwirkung mit dem Bauteil und dem Referenzkörper resultierende Ultraschallwelle detektiert und mittels einer Ermittlungseinrichtung wird eine Randschichtcharakteristik des Bauteils anhand eines Unterschieds zwischen der wenigstens einen erzeugten Ultraschallwelle und der wenigstens einen resultierenden Ultraschallwelle ermittelt. Im Unterschied zu den aus dem Stand der Technik bekannten Verfahren zur Ermittlung der Randschichtcharakteristik von Bauteilen ermöglicht das erfindungsgemäße Verfahren eine besonders einfache, flexible und vor allem zerstörungsfreie Ermittlung der Randschichtcharakteristik. Indem mit Hilfe des Ultraschallsenders eine Ultraschall-Oberflächenwelle, die auch als Rayleigh-Welle bezeichnet wird, in der Randschicht des Bauteils und in der Oberfläche des Referenzkörpers erzeugt wird, kommt es zu charakteristischen Wechselwirkungen der Ultraschallwelle mit den Werkstoffen des Bauteils und des Referenzkörpers. Aufgrund der bekannten Randschichtcharakteristik des Referenzkörpers kann eine direkte Vergleichsanalyse der resultierenden Schallgeschwindigkeit der wenigstens einen Ultraschallwelle durch den Ultraschalldetektor erfolgen. Die Schallgeschwindigkeit der Ultraschallwelle hängt dabei im Wesentlichen von den elastischen Eigenschaften des Bauteilmaterials und des Referenzkörpers ab. Der oder die Referenzkörper kann bzw. können dabei mit exakt definierten Randschichtcharakteristika und Verfestigungszuständen hergestellt werden. Änderungen der Randschicht- und Oberflächeneigenschaften des Bauteils führen daher zu entsprechenden Änderungen der Schallgeschwindigkeit und zu Änderungen in der Wechselwirkung mit dem Referenzkörper und können mit Hilfe der Ermittlungseinrichtung ausgewertet werden, wodurch Informationen über die Qualität und Beschaffenheit der Randschicht des Bauteils erhalten werden. Die Ermittlung der Randschichtcharakteristik beruht mit anderen Worten auf einer vergleichenden Messung. Das erfindungsgemäße Verfahren erlaubt im Unterschied zum Stand der Technik eine zerstörungsfreie und vergleichende Messung und Kontrolle der Qualität und Randschichtcharakteristik des Bauteils. Das erfindungsgemäße Verfahren eignet sich darüber hinaus zur Charakterisierung beliebiger Randschichtsysteme bzw. Oberflächen, beispielsweise zur Charakterisierung von verfestigten Oberflächen oder Beschichtungen. Darüber hinaus können auch Bauteile mit schwer zugänglichen Oberflächenbereichen und komplexen Geometrien, beispielsweise mit gekrümmten Oberflächen problemlos überwacht werden. Das erfindungsgemäße Verfahren kann zudem sehr schnell durchgeführt werden. Damit ist auch eine offizielle Zulassung dieser Messtechnik bzw. dieses Verfahrens beispielsweise für die Bewertung und Lebensdauerprognose von hochbelastbaren Bauteilen für Flugzeugtriebwerke möglich. Es kann grundsätzlich auch vorgesehen sein, dass der Referenzkörper zeitweise vom Bauteil entfernt wird, so dass für die Ermittlung der Randschichtcharakteristik zusätzlich ein Unterschied zwischen der erzeugten Ultraschallwelle und einer resultierenden Ultraschallwelle ohne aufgelegten Referenzkörper mitberücksichtigt wird. Hierdurch kann eine weitere Verbesserung des Ermittlungsergebnisses der Randschichtcharakteristik des Bauteils erzielt werden.

In einer vorteilhaften Ausgestaltung der Erfindung ist vorgesehen, dass die Randschichtcharakteristik des Bauteils vor und/oder nach einer Oberflächenbehandlung des Bauteils ermittelt wird. Die Randschichtcharakteristik des Bauteils kann vor der Oberflächenbehandlung durchgeführt werden, um den Umfang und die Details der erforderlichen Oberflächen- bzw. Randschichtbehandlung besser abschätzen zu können. Weiterhin kann vorgesehen sein, dass die Randschichtcharakteristik des Bauteils nach der Oberflächenbehandlung ermittelt wird, wodurch vorteilhaft die Vollständigkeit und der Erfolg der Oberflächen- bzw. Randschichtbehandlung überprüfbar sind.

Weitere Vorteile ergeben sich dadurch, dass wenigstens ein Verfahrensparameter der Oberflächenbehandlung in Abhängigkeit der ermittelten Randschichtcharakteristik gesteuert und/oder geregelt wird. Hierdurch wird eine besonders hohe Bauteilgüte erzielt, da die Verfahrensparameter in Abhängigkeit des individuellen Zustands des jeweils behandelten Bauteils optimal eingestellt werden können. Beispielsweise hängt die übertragene Energie beim Verfestigungsstrahlen im Wesentlichen ab von Masse, Auftreffgeschwindigkeit, Auftreffwinkel und Härte der Strahlmittelkörner, von der Anzahl der Strahlmitteltreffer, und der Oberflächenbeschaffenheit des Strahlgutes. Die Oberflächenbehandlung kann daher über Verfahrensparameter wie etwa Material und Geometrie des Strahlguts, Partikelgeschwindigkeit, Verfahrgeschwindigkeit der Oberflächenbehandlungseinrichtung über die Oberfläche und dergleichen gezielt beeinflusst werden. Auf diese Weise kann die Oberflächenbehandlung des Bauteils nicht nur besonders schnell, sondern auch besonders reproduzierbar und quantitativ durchgeführt werden, wodurch besonders hohe Arbeitszeit- und Kosteneinsparungen realisierbar sind.

Weitere Vorteile ergeben sich, wenn mittels des Ultraschallsenders wenigstens eine Ultraschallwelle mit einer Frequenz zwischen 5 MHz und 10 MHz erzeugt wird. Unter einer Frequenz zwischen 5 MHz und 10 MHz sind insbesondere Frequenzen von 5,0 MHz, 5,5 MHz, 6,0 MHz, 6,5 MHz, 7,0 MHz, 7,5 MHz, 8,0 MHz, 8,5 MHz, 9,0 MHz, 9,5 MHz oder 10,0 MHz sowie entsprechende Zwischenfrequenzen zu verstehen. Hierdurch können Bauteile aus unterschiedlichsten Materialien, beispielsweise aus Titan- oder Nickelbasis-Werkstoffen, optimal überwacht werden, da die Frequenz der Ultraschallwelle optimal an die elastischen Eigenschaften des betreffenden Materials angepasst werden kann.

In einer weiteren vorteilhaften Ausgestaltung der Erfindung ist vorgesehen, dass zum Ermitteln der Randschichtcharakteristik ein Dispersionsanalyseverfahren verwendet wird und/oder dass mittels der Ermittlungseinrichtung ein Tiefenprofil des Bauteils ermittelt wird. Wenn eine Ultraschallwelle nicht-dispersiv ist, ist ihre Schallgeschwindigkeit unabhängig von ihrer Frequenz.

Mit anderen Worten ändert sich die Geschwindigkeit einer Rayleigh-Welle nicht, wenn ihre Frequenz geändert wird. Da verfestigte Bauteile, insbesondere Bauteile für Flugzeugtriebwerke, jedoch eine dispersive Randschicht besitzen, ist die Schallgeschwindigkeit der an der Oberfläche des Bauteils erzeugten Rayleigh-Welle von ihrer Frequenz abhängig. Hierdurch ändert sich die räumliche und zeitliche Verteilung der Schallgeschwindigkeit. Mit Hilfe einer Dispersionsanalyse kann daher vorteilhaft eine besonders exakte, ortsaufgelöste Randschichtcharakteristik des Bauteils ermittelt werden. Wenn die Wellenlänge einer Ultraschallwelle erhöht wird, erhöht sich auch die Eindringtiefe der Rayleigh-Welle in das Bauteil. In erster Näherung entspricht die Eindringtiefe einer Rayleigh-Welle im Wesentlichen ihrer Wellenlänge, variiert jedoch in Abhängigkeit der Materialeigenschaften des Bauteils. Hierdurch kann mit Hilfe des erfindungsgemäßen Verfahrens vorteilhaft ein Tiefenprofil des Bauteils ermittelt werden, wodurch besonders präzise Aussagen über die Qualität der Oberflächenbehandlung möglich sind.

In einer weiteren vorteilhaften Ausgestaltung der Erfindung ist vorgesehen, dass mittels des Ultraschallsenders mehrere Ultraschallwellen gleicher Frequenz und/oder mehrere Ultraschallwellen unterschiedlicher Frequenzen und/oder wenigstens eine breitbandige Ultraschallwelle erzeugt wird bzw. werden. Dies stellt eine weitere Möglichkeit dar, um in Abhängigkeit des Materials und der Geometrie des Bauteils sowie des verwendeten Oberflächenbehandlungsverfahrens besonders präzise Aussagen über die Qualität und Beschaffenheit der Oberfläche bzw. der Randschicht des Bauteils treffen zu können. Alternativ oder zusätzlich hat es sich als vorteilhaft gezeigt, wenn mittels des Ultraschallsenders gepulste Ultraschallwellen, insbesondere mit einer Pulsfrequenz zwischen 500 s⁻¹ und 1500 s⁻¹ erzeugt werden. Hierdurch ist es möglich, die Beschaffenheit der Randschicht des Bauteils auf Basis der Schallreflektion zu ermitteln. Beispielsweise können mehrere kurze Ultraschall-Impulse pro Sekunde in die Oberfläche des Bauteils eingestrahlt und über Zeitfenster die Geschwindigkeit der reflektierten Ultraschallwellen bestimmt werden.

Weitere Vorteile ergeben sich, wenn als Oberflächenbehandlung ein Verfestigungsverfahren durchgeführt wird. Hierdurch kann insbesondere für ein hochbelastetes Bauteil wie beispielsweise ein Bauteil für ein Flugzeugtriebwerk eine erhebliche Lebensdauerverlängerung erzielt werden. Die Ermittlung der Randschichtcharakteristik mit Hilfe von Rayleigh-Wellen beeinträchtigt das Verfestigungsverfahren vorteilhafter Weise nicht.

Dabei hat es sich als vorteilhaft gezeigt, wenn als Verfestigungsverfahren Kugelstrahlen und/oder Ultraschallkugelstrahlen und/oder Festwalzen und/oder Laserschock-Strahlen (Laser shock peening) verwendet wird. Hierdurch können die durch das erfindungsgemäße Verfahren erzielbaren Vorteile für unterschiedliche Bauteile und unterschiedliche Oberflächenbearbeitungsarten realisiert werden.

Indem ein Bauteil aus einem polykristallinen und/oder einkristallinen und/oder hochtemperaturfesten Werkstoff verwendet wird, wird eine besonders hohe Lebensdauer des Bauteils auch unter späteren extremen Betriebsbedingungen, wie sie beispielsweise in Flugzeugtriebwerken herrschen, sichergestellt. Alternativ oder zusätzlich lassen sich besondere Arbeitszeit- und Kostenvorteile erzielen, wenn als Bauteil eine Verdichterscheibe und/oder eine Turbinenscheibe und/oder eine Schaufel und/oder eine Welle einer Gasturbine, insbesondere eines Flugzeugtriebwerks verwendet wird. Bestehen der wenigstens eine Referenzkörper und das Bauteil aus dem gleichen Werkstoff und besitzen vorzugsweise auch zumindest bereichsweise das gleiche Werkstoffgefüge bzw. den gleichen verfestigten Randschichtzustand, wird die in das Bauteil und den Referenzkörper eingeleitete Ultraschallwelle am geringsten verändert, so dass der Unterschied zwischen der erzeugten und der detektierten Ultraschallwelle minimiert wird. Durch Auflegen eines Referenzkörpers, der aus dem gleichen Material wie das Bauteil besteht und bereits die für das Bauteil gewünschte Oberflächenbeschaffenheit aufweist, beispielsweise die gewünschte Randschichtverfestigung, kann somit die Randschichtcharakteristik, beispielsweise der Verfestigungszustand, des Bauteils besonders einfach und zuverlässig verifiziert werden.

In einer weiteren vorteilhaften Ausgestaltung der Erfindung ist vorgesehen, dass zumindest zwischen dem Bauteil und dem Referenzkörper ein akustisches Kopplungsmittel, insbesondere Wasser und/oder ein Gel angeordnet wird. Das Kopplungsmittel stellt dabei einen möglichst optimalen Kontakt zwischen dem Bauteil und dem Referenzkörper her, wodurch eine entsprechende Verbesserung des Ermittlungsergebnisses erzielt wird. Das Kopplungsmittel sollte dabei frei von Luftbläschen bzw. entgast sein, um den möglichst lückenlosen Schallübergang dauerhaft zu gewährleisten. Dabei kann grundsätzlich vorgesehen sein, dass auch zwischen dem Ultraschallsender und/oder dem Ultraschalldetektor und dem Bauteil und/oder dem Referenzkörper das gleiche oder ein unterschiedliches Kopplungsmittel angeordnet wird, um eine verbesserte Schallübertragung sicherzustellen.

In einer weiteren vorteilhaften Ausgestaltung der Erfindung ist vorgesehen, dass die Randschichtcharakteristik des Referenzkörpers vor dem Anordnen an dem Bauteil durch Röntgenbeugungsanalyse mit schrittweisem chemischem Abtrag, und/oder durch Bohrlochanalyse und/oder durch Synchrotronstrahlungsanalyse und/oder durch Neutronenbeugungsanalyse ermittelt wird. Mit anderen Worten ist es vorgesehen, dass die Randschichtcharakteristik des Referenzkörpers zunächst mit gängigen, aus dem Stand der Technik bekannten Techniken und Prüfmethoden ermittelt wird. Da der Referenzkörper im Unterschied zum Bauteil einfache Geometrien aufweisen kann, ist hierdurch eine weitere Möglichkeit zur Verbesserung des Ermittlungsergebnisses der Randschichtcharakteristik des Bauteils gegeben.

Dabei kann das Verfahren in weiterer Ausgestaltung der Erfindung besonders flexibel durchgeführt werden, wenn der Ultraschallsender und/oder der Ultraschalldetektor am Bauteil und/oder am Referenzkörper angeordnet wird. Indem beispielsweise der Ultraschalldetektor am Referenzkörper angeordnet wird, kann die gesamte Oberfläche des Bauteils großflächig und schnell überprüft werden, indem der Referenzkörper entsprechend über das Bauteil bewegt wird. Der Ultraschallsender kann dabei fest oder beweglich am Bauteil oder auch am Referenzkörper angeordnet werden. Ebenso kann der Ultraschalldetektor fest oder beweglich am Bauteil angeordnet werden, während der Ultraschallsender am Referenzkörper angeordnet wird.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
Fig. 1 eine schematische seitliche Schnittansicht einer Vorrichtung erfindungsgemäßen Ermitteln einer Randschichtcharakteristik eines Bauteils; und
Fig. 2 eine schematische seitliche Schnittansicht einer alternativen Ausführungsform der Vorrichtung.

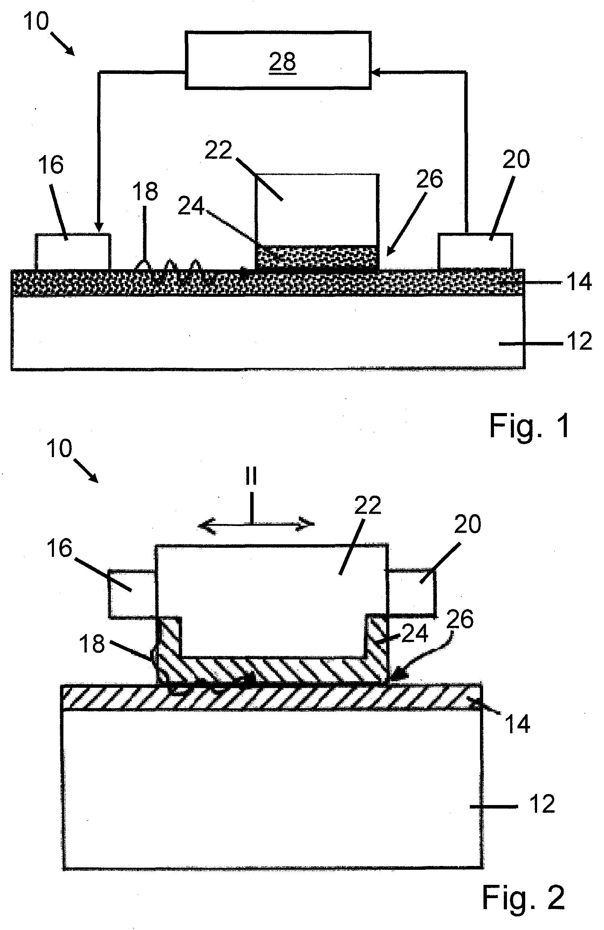

Fig. 1 zeigt schematische seitliche Schnittansicht einer Vorrichtung 10 zum erfindungsgemäßen Ermitteln einer Randschichtcharakteristik eines Bauteils 12, welches vorliegend als Verdichterscheibe für ein Flugzeugtriebwerk ausgebildet ist und aus einem hochtemperaturfesten Material wie etwa Inconel 718 oder Titan 64 besteht. Das Bauteil 12 wurde mit Hilfe einer als Kugelstrahleinrichtung ausgebildeten Oberflächenbehandlungseinrichtung (nicht gezeigt) in an sich bekannter Weise mit Strahlgut beaufschlagt, um im Randbereich der Oberfläche einen verfestigen Bereich 14 zu erzielen. Die Randschichtverfestigung des Bauteils 12 erfolgt beispielsweise mit einer Strahlintensität entsprechend 0,1-0,25 mm A Almen und mit einer Tiefe zwischen 100 µm und 300 µm.

Zur Kontrolle des Oberflächenbehandlungsverfahrens und der Randschichtcharakteristik des Bauteils 12 umfasst die Vorrichtung 10 einen Ultraschallsender 16, mittels welchem vor und/oder nach der Oberflächenbehandlung zumindest im zu verfestigenden Bereich 14 der Oberfläche des Bauteils 12 Ultraschallwellen 18 mit Frequenzen zwischen 5 MHz und 10 MHz erzeugt werden. Die Ultraschallwellen 18 können kontinuierlich oder als Schallpulse mit beispielsweise 1000 Pulsen pro Sekunde erzeugt werden. Der Ultraschallsender 16 ist im gezeigten Ausführungsbeispiel unmittelbar an der Oberfläche des Bauteils 12 angeordnet. Die Ultraschallwellen 18, die auch als Rayleigh-Wellen bezeichnet werden, wandern als Oberflächenwellen zu einem vom Ultraschallsender 16 beabstandeten Ultraschalldetektor 20 der Vorrichtung 10, mittels welchem die aus der Wechselwirkung mit dem Bauteil 12 resultierende Ultraschallwellen 18 detektiert werden.

Zwischen dem Ultraschallsender 16 und dem Ultraschalldetektor 20 ist ein Referenzkörper 22 im Schallweg der Ultraschallwellen 18 an der Oberfläche des Bauteils 12 angeordnet. Der Referenzkörper 22 besteht aus dem gleichen Werkstoff wie das Bauteil 12 und besitzt eine bekannte Oberflächen- bzw. Randschichtcharakteristik. Hierzu weist der Referenzkörper 22 seinerseits einen verfestigten Bereich 24 auf, dessen Werkstoffgefüge demjenigen des zu erzeugenden Bereichs 14 des Bauteils 12 entspricht. Alternativ kann vorgesehen sein, dass der Referenzkörper 22 vollständig aus dem definierten Werkstoffgefüge besteht. Zur besseren Schallübertragung ist zwischen dem Bauteil 12 und dem Referenzkörper 22 ein akustisches Kopplungsmittel 26 angeordnet, bei dem es sich beispielsweise um Wasser oder ein Gel handeln kann.

Weiterhin umfasst die Vorrichtung 10 eine zum Datenaustausch mit dem Ultraschallsender 16 und dem Ultraschalldetektor 20 gekoppelte Ermittlungseinrichtung 28, mittels welcher eine Randschichtcharakteristik des Bauteils 12 im bearbeiteten Bereich 14 anhand eines Unterschieds zwischen der erzeugten Ultraschallwelle(n) 18 und der detektierten Ultraschallwelle(n) 18 ermittelt wird, so dass eine Vergleichsamalyse der Oberflächenverfestigung gegeben ist. Durch Frequenzvariation können unterschiedliche Tiefenbereiche erfasst werden. Die Ermittlungseinrichtung 28 kann die Randschichtcharakteristik beispielsweise durch Dispersions-Analyse ermitteln. Durch Variation der Frequenzen der Ultraschallwellen 18 ist es zudem möglich, ein Tiefenprofil des Bauteils 12 zu erstellen. Weiterhin kann vorgesehen sein, dass die Ermittlungseinrichtung 28 zum Datenaustausch mit einem Steuer- und/oder Regelsystem (nicht gezeigt) der Oberflächenbehandlungseinrichtung gekoppelt ist, um Verfahrensparameter der Oberflächenbehandlungseinrichtung in Abhängigkeit der ermittelten Randschichtcharakteristik des Bauteils 12 zu steuern und/oder zu regeln.

Durch Auflegen des Referenzkörpers 22 auf die zu prüfende Oberfläche des Bauteils 12 wechselwirkt die erzeugte Ultraschallwelle 18 sowohl mit der Oberfläche des Bauteils 12, als auch mit der Oberfläche des Referenzkörpers 22. Bestehen der Referenzkörper 22 und das Bauteil 12 aus dem gleichen Werkstoff, haben gleiches Werkstoffgefüge und den gleichen verfestigten Randschichtzustand, wird die Ultraschallwelle 18 am geringsten verändert. Durch Auflegen des Referenzkörpers 22 mit der gewünschten Randschichtverfestigung (Bereich 24) kann so der Verfestigungszustand des Bauteils 12 geprüft und verifiziert werden. Der Referenzkörpers 22 kann dabei grundsätzlich ein- oder mehrmals auf der Oberfläche des Bauteils 12 bewegt werden. Weiterhin kann vorgesehen sein, dass mehrere, gegebenenfalls unterschiedlich ausgebildete Referenzkörper 22 verwendet werden und die resultierenden Interferenzen der Ultraschallwellen 18 zur Ermittlung der Randschichtcharakteristik herangezogen werden. Weiterhin können unterschiedliche Referenzkörper 22 nacheinander auf dem Bauteil 12 angeordnet und die jeweils resultierenden Ultraschallwellen 18 detektiert und zur Ermittlung der Randschichtcharakteristik herangezogen werden.

Fig. 2 zeigt eine schematische seitliche Schnittansicht einer alternativen Ausführungsform der Vorrichtung 10. Im Unterschied zum vorhergehenden Ausführungsbeispiel sind dabei sowohl der Ultraschallsender 16 als auch der Ultraschalldetektor 20 am Referenzkörper 22 befestigt. Die Ermittlungseinrichtung 28 ist aus Gründen der Übersichtlichkeit nicht dargestellt. Die Ultraschallwellen 18 werden zunächst in den Referenzkörper 22 eingeleitet und pflanzen sich "um die Ecke" über das Kopplungsmittel 26 in den verfestigten Bereich 14 des Bauteils 12 fort. Von dort aus wandern die Ultraschallwellen 18 entlang der Auflagefläche des Referenzkörpers 22 bis zum Rand des Referenzkörpers 22 und von dort aus zum Ultraschalldetektor 20, welcher die aus der Wechselwirkung resultierenden Ultraschallwellen 18 detektiert. Somit wechselwirken die Ultraschallwellen 18 auch in dieser Konfiguration der Vorrichtung 10 sowohl mit dem Bauteil 12 bzw. mit dessen verfestigtem Bereich 14, als auch mit dem Referenzkörper 22 bzw. mit dessen verfestigtem Bereich 24, wodurch auf die Randschichtcharakteristik des Bauteils 12 geschlossen werden kann. Da sowohl der Ultraschallsender 16 als auch der Ultraschalldetektor 20 am Referenzkörper 22 befestigt sind, können sie gemäß Doppelpfeil II gemeinsam mit diesem über die Oberfläche des Bauteils 12 bewegt werden. Hierdurch können auch großflächige Bauteile 12 schnell und präzise "abgescannt" werden, so dass grundsätzlich die Randschichtcharakteristik der gesamten Oberfläche des Bauteils 12 ermittelbar ist.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Verfahren zum Ermitteln einer Randschichtcharakteristik eines Bauteils (12), insbesondere eines Bauteils (12) für ein Flugzeugtriebwerk, bei welchem:
- ein Referenzkörper (22) mit einer bekannten Randschichtcharakteristik an der Oberfläche des Bauteils (12) angeordnet wird;
- mittels eines Ultraschallsenders (16) wenigstens eine Ultraschall-Oberflächenwelle (18) in die Oberflächen des Bauteils (12) und des Referenzkörpers (22) eingeleitet wird, wobei es sich bei den eingeleiteten Ultraschall-Oberflächenwellen um Rayleighwellen handelt;
- mittels eines Ultraschalldetektors (20) wenigstens eine aus der Wechselwirkung mit dem Bauteil (12) und dem Referenzkörper (22) resultierende Ultraschallwelle (18) detektiert wird; und
- mittels einer Ermittlungseinrichtung (28) eine Randschichtcharakteristik des Bauteils (12) anhand eines Unterschieds zwischen der wenigstens einen erzeugten Ultraschallwelle (18) und der wenigstens einen resultierenden Ultraschallwelle (18) ermittelt und ausgewertet wird, wodurch Informationen über die Qualität und Beschaffenheit der Randschicht des Bauteils erhalten werden.

2. Verfahren nach Anspruch 1, **dadurch gekennzeichnet, dass** die Randschichtcharakteristik des Bauteils (12) vor und/oder nach einer Oberflächenbehandlung des Bauteils (12) ermittelt wird.

3. Verfahren nach Anspruch 2, **dadurch gekennzeichnet, dass** wenigstens ein Verfahrensparameter der Oberflächenbehandlung in Abhängigkeit der ermittelten Randschichtcharakteristik gesteuert und/oder geregelt wird.

4. Verfahren nach einem der Ansprüche 1 bis 3, **dadurch gekennzeichnet, dass** models des Ultraschallsenders (16) wenigstens eine Ultraschallwelle (18) mit einer Frequenz zwischen 5 MHz und 10 MHz erzeugt wird.

5. Verfahren nach einem der Ansprüche 1 bis 4, **dadurch gekennzeichnet, dass** zum Ermitteln der Randschichtcharakteristik ein Dispersionsanalyseverfahren verwendet wird und/oder dass mittels der Ermittlungseinrichtung (28) ein Tiefenprofil des Bauteils (12) ermittelt wird.

6. Verfahren nach einem der Ansprüche 1 bis 4, **dadurch gekennzeichnet, dass** mittels des Ultraschallsenders (16) mehrere Ultraschallwellen (18) gleicher Frequenz und/oder mehrere Ultraschallwellen (18) unterschiedlicher Frequenzen und/oder wenigstens eine breitbandige Ultraschallwelle (18) und/oder gepulste Ultraschallwellen (18), insbesondere mit einer Pulsfrequenz zwischen 500 s-1 und 1500 s-1 erzeugt werden erzeugt wird bzw. werden.

7. Verfahren nach einem der Ansprüche 2 bis 6, **dadurch gekennzeichnet, dass** als Oberflächenbehandlung ein Verfestigungsverfahren durchgeführt wird.

8. Verfahren nach Anspruch 7, **dadurch gekennzeichnet, dass** als Verfestigungsverfahren Kugelstrahlen und/oder Ultraschallkugelstrahlen und/oder Festwalzen und/oder Laserschock-Strahlen (Laser shock peening) verwendet wird.

9. Verfahren nach einem derAnsprüche 1 bis 8, **dadurch gekennzeichnet, dass** ein Bauteil (12) aus einem polykristallinen und/oder einkristallinen und/oder hochtemperaturfesten Werkstoff verwendet wird und/oder dass als Bauteil (12) eine Verdichterscheibe und/oder eine Turbinenscheibe und/oder eine Schaufel und/oder eine Welle einer Gas-turbine, insbesondere eines Flugzeugtriebwerks verwendet wird und/oder dass das Bauteil (12) und der Referenzkörper (22) aus dem gleichen Werkstoff bestehen und vorzugsweise zumindest bereichsweise das gleiche Werkstoffgefüge aufweisen.

10. Verfahren nach einem der Ansprüche 1 bis 9, **dadurch gekennzeichnet, dass** zumindest zwischen dem Bauteil (12) und dem Referenzkörper (22) ein akustisches Kupplungsmittel (26), insbesondere Wasser und/oder ein Gel angeordnet wird.

11. Verfahren nach einem der Ansprüche 1 bis 10, **dadurch gekennzeichnet, dass** die Randschichtcharakteristik des Referenzkörpers (22) vor dem Anordnen an dem Bauteil (12) durch Röntgenbeugungsanalyse mit schrittweisem chemischem Abtrag, und/oder durch Bohrlochanalyse und/oder durch Synchrotronstrahlungsanalyse und/oder durch Neutronenbeugungsanalyse ermittelf wird.

12. Verfahren nach einem der Ansprüche 1 bis 11, **dadurch gekennzeichnet, dass** der Ultraschallsender (16) und/oder der Ultraschalldetektor (20) am Bauteil (12) und/oder am Referenzkörper (22) angeordnet wird.

## Claims

1. A method for determining a surface layer characteristic of a component (12), in particular a component (12) for an aircraft engine, in which:
- a reference body (22) with a known surface layer characteristic is arranged on the surface of the component (12);
- at least one ultrasonic surface wave (18) is introduced into the surfaces of the component (12) and the reference body (22) by means of an ultrasonic transmitter (16), wherein the introduced ultrasonic surface waves are Rayleigh waves;
- at least one ultrasonic wave (18) resulting from the interaction with the component (12) and the reference body (22) is detected by means of an ultrasonic detector (20); and
- a surface layer characteristic of the component (12) is determined and evaluated by means of a determination device (28) based on a difference between the at least one generated ultrasonic wave (18) and the at least one resulting ultrasonic wave (18), wherein information about the quality and characteristics of the surface layer of the component is obtained.

2. The method as claimed in claim I, **characterized in that** the surface layer characteristic of the component (12) is determined before and/or after a surface treatment of the component (12).

3. The method as claimed in claim 2, **characterized in that** at least one process parameter of the surface treatment is controlled and/or regulated depending on the determined surface layer characteristic.

4. The method as claimed in one of claims 1 to 3, **characterized in that** at least one ultrasonic wave (18) with a frequency of between 5 MHz and 10 MHz is generated by means of the ultrasonic transmitter (16).

5. The method as claimed in one of claims 1 to 4, **characterized in that** a dispersion analysis method is used for determining the surface layer characteristic and/or that a depth profile of the component (12) is determined by means of the determination device (28).

6. The method as claimed in one of claims I to 4, **characterized in that** several ultrasonic waves (18) with the same frequency and/or several ultrasonic waves (18) with different frequencies and/or at least one broadband ultrasonic wave (18) and/or pulsed ultrasonic waves (18), in particular with a pulse frequency of between 500 s-1 and 1500 s-1, are generated by means of the ultrasonic transmitter (16).

7. The method as claimed in one of claims 2 to 6, **characterized in that** a hardening method is carried out as surface treatment.

8. The method as claimed in claim 7, **characterized in that** shot blasting and/or ultrasonic shot blasting and/or solid rolling and/or laser shock peening is used as the hardening method.

9. The method as claimed in one of claims 1 to 8, **characterized in that** a component (12) made or a polycrystalline and/or monocrystalline and/or hiah-temperature resistant material is used and/or that a compressor disc and/or a turbine disc and/or a blade and/or a shaft of a gas turbine, in particular of an aircraft engine, is used as the component (12) and/or that the component (12) and the reference body (22) consist of the same material and preferably have the same material structure at least in regions.

10. The method as claimed in one of claims 1 to 9, **characterized in that** an acoustic coupling medium (26), in particular water and/or a gel, is arranged at least between the component (12) and the reference body (22).

11. The method as claimed in one of claims 1 to 10, **characterized in that** the surface layer characteristic of the reference body (22) is determined by X-ray diffraction analysis with phased chemical removal and/or by borehole analysis and/or by synchrotron radiation analysis and/or by neutron diffraction analysis before being arranged on the component (12).

12. The method as claimed in one of claims 1 to 11, **characterized in that** the ultrasonic transmitter (16) and/or the ultrasonic detector (20) is arranged on the component (12) and/or on the reference body (22).

## Revendications

1. Procédé pour la détermination d'une caractéristique de couche superficielle d'une pièce (12), en particulier d'une pièce (12) destinée à un moteur d'avion, dans lequel :
- un corps de référence (22) avec une caractéristique de couche superficielle est disposé sur la surface de la pièce (12) ;
- au moins une onde ultrasonore superficielle (18) est introduite dans la surface de la pièce (12) et du corps de référence (22) à l'aide d'un émetteur d'ultrasons (16), les ondes ultrasonores superficielles introduites étant des ondes de Rayleigh ;
- au moins une onde ultrasonore (18) résultant d'une interaction avec la pièce (12) et le corps de référence (22) est détectée à l'aide d'un détecteur d'ultrasons (20) ; et
- une caractéristique de couche superficielle de la pièce (12) est déterminée et évaluée à l'aide d'un dispositif de détection (28), sur la base d'une différence entre l'au moins une onde ultrasonore (18) produite et l'au moins une onde ultrasonore (18) résultante, permettant ainsi d'obtenir des informations sur la qualité et les propriétés de la couche superficielle de la pièce.

2. Procédé selon la revendication 1, **caractérisé en ce que** la caractéristique de couche superficielle de la pièce (12) est déterminée avant et/ou après un traitement de surface de la pièce (12).

3. Procédé selon la revendication 2, **caractérisé en ce qu'**au moins un paramètre de procédé du traitement de surface est commandé et/ou réglé en fonction de la caractéristique de couche superficielle déterminée.

4. Procédé selon l'une des revendications 1 à 3, **caractérisé en ce qu'**au moins une onde ultrasonore (18) avec une fréquence entre 5 MHz et 10 MH₂ est produite à l'aide de l'émetteur d'ultrasons (16).

5. Procédé selon l'une des revendications 1 à 4, **caractérisé en ce qu'**un procédé d'analyse de dispersion est utilisé pour déterminer la caractéristique de couche superficielle, et/ou **en ce qu'**un profil de profondeur de la pièce (12) est déterminé à l'aide du dispositif de détection (28).

6. Procédé selon l'une des revendications 1 à 4, **caractérisé en ce que** l'émetteur d'ultrasons (16) permet de produire plusieurs ondes ultrasonores (18) de la même fréquence et/ou plusieurs ondes ultrasonores (18) de fréquences différentes et/ou au moins une onde ultrasonore (18) à large bande et/ou des ondes ultrasonores (18) puisées, en particulier avec une fréquence d'impulsion entre 500 s⁻¹ et 1500 s⁻¹.

7. Procédé selon l'une des revendications 2 à 6, **caractérisé en ce qu'**un procédé de renforcement est exécuté en tant que traitement de surface.

8. Procédé selon la revendication 7, **caractérisé en ce qu'**un grenaillage et/ou un grenaillage ultrasonore et/ou un écrouissage et/ou un martelage par chocs laser (Laser shock peening) sont exécutés en tant que procédés de renforcement.

9. Procédé selon l'une des revendications 1 à 8, **caractérisé en ce que** la pièce (12) utilisée est constituée d'un matériau polycristallin et/ou monocristallin et/ou résistant aux températures élevées, et/ou **en ce qu'**un disque de compresseur et/ou un disque de turbine et/ou une ailette et/ou un arbre de turbine à gaz, en particulier d'un moteur d'avion, est utilisé en tant que pièce (12), et/ou **en ce que** la pièce (12) et le corps de référence (22) sont constitués du même matériau et présentent de préférence au moins par endroits la même texture de matériau.

10. Procédé selon l'une des revendications 1 à 9, **caractérisé en ce qu'**un moyen d'accouplement acoustique (26), en particulier de l'eau ou un gel, est disposé entre la pièce (12) et le corps de référence (22).

11. Procédé selon l'une des revendications 1 à 10, **caractérisé en ce que** la caractéristique de couche superficielle du corps de référence (22) est déterminée avant la disposition sur la pièce (12), par une analyse de diffraction de rayons X, avec enlèvement chimique progressif, et/ou par une analyse de puits et/ou par une analyse de rayonnement synchrotron et/ou par une analyse de diffraction de neutrons.

12. Procédé selon l'une des revendications 1 à 11, **caractérisé en ce que** l'émetteur d'ultrasons (16) et/ou le détecteur d'ultrasons (20) est/sont monté(s) sur la pièce (12) et/ou sur le corps de référence (22).
